# EUROPÄISCHE PATENTSCHRIFT

(11) **EP 2 051 343 B1**
(45) Veröffentlichungstag und Bekanntmachung des Hinweises auf die Patenterteilung: **29.06.2011**
(21) Anmeldenummer: 08018016.9
(22) Anmeldetag: 15.10.2008
(51) Int. Cl.: H01S 3/10, H01S 3/067, H01S 3/23

(54) **Faserlaser-Anordnung hoher Strahlleistung**
Fibre laser assembly with high beam output
Ensemble laser à fibre à haute puissance

(30) Priorität: 16.10.2007 DE 102007049436
(43) Veröffentlichungstag der Anmeldung: 22.04.2009
(73) Patentinhaber: LFK-Lenkflugkörpersysteme GmbH, 86529 Schrobenhausen (DE)
(72) Erfinder: Protz, Rudolf, Dr., 85635 Höhenkirchen/Siegertsbrunn (DE); Zoz, Jürgen, Dr., 86316 Friedberg (DE)
(74) Vertreter: Hummel, Adam

(56) Entgegenhaltungen:
- EP-A- 0 980 123
- EP-A- 1 041 686
- WO-A-03/055016
- US-A- 4 862 467
- US-A- 4 867 534
- US-A1- 2005 201 429

## Beschreibung

Die Erfindung betrifft eine Faserlaser-Anordnung hoher Strahlleistung.

Faserlaser gehören der Gattung der so genannten All-Solid-State-Laser, d.h. den diodengepumpten Festkörperlasern an. Durch den Aufbau des Lasers mit dem aktiven Medium in einem als Faser dienenden Wellenleiter, der aus einem dotierten Kern für die Führung des Lichtes und einem Mantel besteht, können die thermischen Probleme herkömmlicher Festkörperlaser bei der Erzeugung hoher Leistungen umgangen werden. Solche Glaslaser mit Lichtwellenleitereigenschaften ermöglichen aufgrund ihrer großen Länge eine sehr hohe Verstärkung. Moderne Mantel-Pumptechniken mit leistungsfähigen Laserdioden, effektiven Kühlkonzepten sowie der Kopplung mehrerer kontinuierlich arbeitender Einzel-Faserlaser haben es möglich gemacht, mit solchen Faserlasern im KW-Bereich zu arbeiten; vgl. Messe "Laser 2005", IPG-Photonics Corp.

Eine gattungsgemäße, sämtliche Merkmale des Oberbegriffes des Patentanspruches 1 aufweisende Faserlaser-Anordnung hoher Strahlleistung ist aus der EP 1 041 686 bekannt.

Zur Kompensation von atmosphärischen Turbulenzen ist bei Hochenergielaser-Anordnungen die Verwendung von adaptiven Spiegeln bekannt, welche der Laseranordnung nachgeordnet in den Strahlengang gebracht werden und dort durch Deformation der Spiegeloberfläche eine Wellenfront-Korrektur bewirken, vgl. "Principles of Adaptive Optics, Robert K. Tyson, Academic Press, 1991. Die damit erzielbare Regelbandbreite ist durch die mechanischen Eigenschaften der adaptiven Spiegel aber beschränkt.

Hiervon ausgehend liegt der Erfindung die Aufgabe zugrunde, die bekannten Faserlaser-Anordnungen zu verbessern, insbesondere deren Strahlqualität zu erhöhen und die im praktischen Einsatz solcher Faserlaser-Anordnungen auftretenden Turbulenzstörungen zu beseitigen.

Diese Aufgabe ist gemäß der Erfindung durch die Merkmale des Patentanspruches 1 gelöst.

Weitere Merkmale der Erfindung ergeben sich aus den Unteransprüchen.

Durch die Erfindung wird eine Anordnung mit Festkörper-Faserlasern geschaffen, insbesondere von Laserdioden gepumpten Neodym-, Herbium- oder Erbium-Glasfaserlasern, die aus einem in einem einzelnen im Longitudinal-Mode betriebenen Faserlaser-Oszillator gespeist werden, dem ein Faser-Splitter nachgeordnet ist, welcher die von dem Faserlaser-Oszillator gebildete Pumpenergie in eine vorgegebene Anzahl von Lichtleitfaserzweigen innerhalb der Anordnung verzweigt verteilt. Den Lichtleitfasern sind optische Phasenschieber-Elemente zugeordnet, die samt Phasenverstärkern in jedem dieser Zweige diese bilden. Diese Laserfaser-Anordnung wird mit einer elektronischen Regeleinrichtung betrieben, welche durch geeignete Verschiebungen der optischen Phasen in den einzelnen Zweigen der Faserlaser-Anordnung eine Kompensation von atmosphärischen Turbulenzeffekte auf dem Ausbreitungsweg der Laserstrahlung zum Ziel und damit eine optimale Fokussierung der gesamten Laserstrahlung auf ein entfernt vorgegebenes Ziel bzw. einen Zielpunkt bewirkt.

Zur Gewinnung der Regelsignale wird das vom Zielpunkt am Ausbreitungsweg zum Sender, also der Faserlaser-Anordnung zurück gestreute Licht mit einem Strahlteiler auf einen Wellenfrontsensor geleitet, der die Phasenfront des Lichtes vermisst. Aus dem Messsignal wird in einer Regelelektronik die dazu phasenkonjugierte Wellenfront berechnet. Daraus werden anschließend die Eingangssignale zur Ansteuerung der optischen Phasenschieber-Elemente in der Faserlaser-Anordnung, einem Faserlaserarray abgeleitet.

Mit einem zweiten Strahlteiler wird im Ausgangsstrahl der Faserlaser-Anordnung ein Teil der von der Faserlaser-Anordnung ausgesandten Laserstrahlung auf eine Detektoranordnung geleitet und dort kohärent mit dem Strahl eines Lokal-Oszillator-Lasers gemischt. Aus den Mischsignalen der einzelnen Detektoren werden die jeweiligen Phasendifferenzen in den einzelnen Faserlaser-Zweigen bestimmt und in der Regelelektronik für die gewollte Phasenverschiebung verwertet, so dass eine optimale Phasenkopplung der einzelnen FaserlaserZweige der Anordnung für die gewünschte Intensität der ausgesandten Laserstrahlung im Zielpunkt erzielt wird.

Für eine effektive Gewinnung der Regelsignale wird der Zielpunkt erfindungsgemäß von einem getrennten Beleuchtungslaser bestrahlt .

Das erfindungsgemäße, aus einer Anzahl von Faserlaser-Verstärkern bestehende, von einem gemeinsamen Master-Oszillator gespeiste phasengekoppelte Faserlaser-Array vermeidet die Verwendung von Spiegeln zu Kompensation von atmosphärischen Turbulenzen, verbessert durch die erzielte Fokussierung der Laserstrahlung auf eine geringe Fleckgröße die Strahlqualität und ermöglicht infolge der Aufteilung des Faserlaser-Arrays in einzelne beliebig viele Faserlaserverstärker-Zweige eine skalierbar zu erhöhende Gesamtleistung der auszusendenden Laserstrahlung, ohne dass dabei die Qualität der Fokussierung der Strahlung im Zielpunkt infolge von Turbulenzstörungen Einbußen erleidet.

Mögliche Anwendungsfälle der Erfindung sind die "Free-Air" genannte optische Kommunikation über sehr lange Strecken, optische Gegenmaßnahmen gegen Sensoren sowie der Einsatz von Lasern gegen Flugziele.

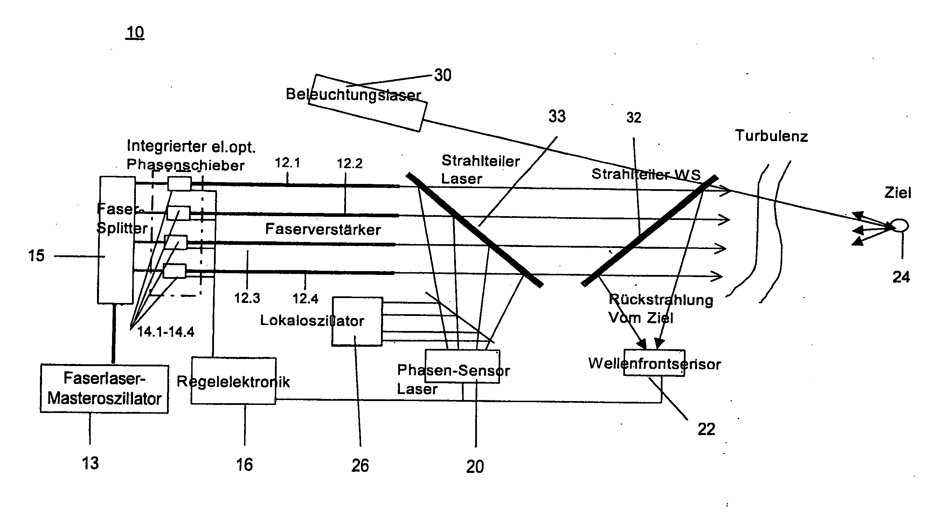

Die Erfindung ist nachfolgend an Hand des Funktionskonzepts eines in der Zeichnung dargestellten Ausführungsbeispiels einer phasengekoppelten Faserlaser-Anordnung mit Kompensation auftretender Turbulenzstörungen beschrieben.

Eine insgesamt mit der Bezugsziffer 10 bezeichnete Faserlaser-Anordnung, nachfolgend mit Faserlaser-Array bezeichnet, umfasst eine Anzahl - im Ausführungsbeispiel vier - laserdiodengepumpte Neodym-Glasfaserlaser als Faserlaser-Verstärker 12.1 bis 12.4, die ihre Pumpenergie von einem gemeinsamen Faserlaser-Master-Oszillator 13 unter Vermittlung eines Faser-Splitters 15 erhalten. Über den Faser-Splitter 15 wird in an sich bekannter Weise die Pumpenergie in die vorgegebene Anzahl der Glasfaserlaserzweige verteilt. Jedem Faserlaserverstärker 12.1 bis 12.4 ist ein elektrooptischer Phasenschieber 14.1 bis 14.4 zugeordnet, welche über eine gemeinsame Regelelektronik 16 gesteuert werden.

Die gemeinsame Regelelektronik 16 erhält ihre steuernden Eingangssignale von einem Laserphasen-Sensor 20 und einem Wellenfront-Sensor 22.

Die das vorstehend beschriebene Faserlaser-Array verlassende Strahlung ist auf ein Ziel oder einen Zielpunkt 24 gerichtet. Zur besseren Gewinnung der Regelsignale für die Phasenschieber 14 ist ein auf den Zielpunkt 24 gerichteter Beleuchtungslaser 30 vorgesehen. Ferner sind in den Strahlengang ein dem Wellenfront-Sensor 22 zugeordneter Strahlenteiler 32 und ein dem Laserphasen-Sensor 20 zugeordneter Strahlenteiler 33 eingeschaltet. Der Strahlenteiler 32 dient dazu, dass vom Zielpunkt 24 am Ausbreitungsweg zum Faserlaser-Array zurück gestreute Licht auf den Wellenfront-Sensor 22 zu leiten, der die Phasenfront des Lichtes vermisst. Das dabei ermittelte Messsignal wird der Regelelektronik 16 zugeleitet.

Mit dem zweiten Strahlenteiler 33 wird ein Teil der vom Faserlaser-Array ausgesandten Laserstrahlung auf den Phasenleser-Sensor 20 geleitet und dort kohärent mit dem Strahl eines Lokal-Oszillators 26 gemischt.

Aus den Mischsignalen der einzelnen Detektoren, also der Sensoren 20 und 22, werden die jeweiligen Phasendifferenzen in den einzelnen Faserlaserzweigen bestimmt und in der Regelelektronik 16 für die Regelung ausgewertet, um eine optimale Phasenkopplung der einzelnen Faserzweige des Faserlaser-Arrays 10 für die Erhöhung der Intensität der ausgesandten Laserstrahlung im Zielpunkt 24 zu erzielen.

Auf die vorstehend beschriebene Weise werden Einflüsse von Turbulenz zwischen Faserlaser-Array 10 und Ziel 24 eliminiert und eine überraschend gute Fokussierung der am Ziel 24 eintreffenden Strahlung auf sehr geringe Fleckgröße erzielt.

Über den Faser-Splitter 15 kann eine Skalierung der Gesamtleistung der Laserstrahlung des Faserlaser-Arrays durch Hinzufügen oder Abschalten von beliebig vielen Zweigen der Faserlaserverstärker 12.1 bis 12.n verändert werden, ohne dass die Qualität der Fokussierung der Strahlung im Ziel 24 infolge Turbulenzen Einbußen erleidet.

### BEZUGSZEICHENLISTE

- 10: Faserlaser-Anordnung / -Array
- 12.1 - 12.n: Faserlaserverstärker
- 13: Faserlaser-Master-Oszillator
- 14.1 - 14.n: elektrooptischer Phasenschieber
- 15: Faser-Splitter
- 16: Regelelektronik
- 20: Laserphasen-Sensor
- 22: Wellenfront-Sensor
- 24: Ziel / Zielpunkt
- 26: Lokal-Oszillator
- 30: Beleuchtungslaser
- 32: Strahlteiler
- 33: Strahlteiler

## Patentansprüche

1. Faserlaser-Anordnung (10) hoher Strahlleistung, bestehend aus mehreren kontinuierlich arbeitenden kohärenten Einzelfaserlasern (12.1 - 12.n), denen die von einem gemeinsamen in longitudinalem Mode betriebenen Master-Oszillator (13) erzeugte Pumpenergie über einen Faser-Splitter (15) in die Einzelfaserlaser (12.1 bis 12.n) verzweigt verteilt zuführbar ist, wobei
jedem Einzelfaserlaser (12.1 - 12.n) ein integrierter elektrooptischer Phasenschieber (14.1 - 14.n) zugeordnet ist, wobei diese Phasenschieber (14.1 - 14.n) über eine Regelelektronik (16) derart steuerbar sind, dass durch geeignete Verschiebungen der optischen Phasen in Einzelfaserlaser (12.1 - 12.n) der Faserlaser-Anordnung (10) eine Kompensation atmosphärischer Turbulenzeffekte auf dem Ausbreitungsweg der Laserstrahlung zu einem Ziel (24) erfolgt, um eine optimale Fokussierung der gesamten Laserstrahlung auf dem entfernten Ziel (24) zu erhalten,
**dadurch gekennzeichnet, dass**
zusätzlich zu den oben genannten Einzelfaserlasern (12.1-12.n) ein das Ziel (24) beleuchtender Beleuchtungslaser (30) vorgesehen ist, der für eine effektive Gewinnung der Regelsignale für die einzelnen Faserlaserzweige (12.1 - 12.n) angepasst ist.

2. Faserlaser-Anordnung nach Anspruch 1, **dadurch gekennzeichnet, dass** das vom Ziel (24) am Ausbreitungsweg der Laserstrahlung der Faserlaser-Anordnung zum Sender zurück gestreute Licht zwecks Vermessung seiner Phasenfront mittels eines im Strahlengang befindlichen Strahlenteilers einem Wellenfront-Sensor (22) zuleitbar ist, dessen Messsignale zur Ermittlung der Signale für die Ansteuerung der Phasenschieber (14.1 - 14.n) der Regelelektronik (16) zuleitbar sind.

3. Faserlaser-Anordnung nach Anspruch 1, **dadurch gekennzeichnet, dass** zwecks Ermittlung der jeweiligen Phasendifferenzen in den einzelnen Zweigen ein zweiter Strahleiter (33) im Ausgangsstrahl der von der Faserlaser-Anordnung (10) ausgesandten Strahlung angeordnet ist, dem ein Laserphasen-Sensor (20) zugeordnet ist, dessen Ausgangssignale ebenfalls der Regelelektronik (16) zuleitbar sind.

4. Faserlaser-Anordnung nach den Ansprüchen 1 bis 3, **dadurch gekennzeichnet, dass** zwecks Skalierung der Strahlleistung der Faserlaser-Anordnung (10) einzelne Faserzweige (12.1 - 12.n) der Faserlaser-Anordnung über den Faser-Splitter (15) zu- und Abschaltbar sind.

## Claims

1. Fibre laser arrangement (10) of high beam power, comprising a plurality of continuously operating coherent individual fibre lasers (12.1-12.n) which can be fed the pump energy generated by a common master oscillator (13) operated in longitudinal mode, said feed being performed with branched distribution into the individual fibre lasers (12.1 to 12.n) via a fibre splitter (15),
each individual fibre laser (12.1-12.n) being assigned an integrated electro-optical phase shifter (14.1-14.n), it being possible for said phase shifters (14.1-14.n) to be controlled via a control electronics (16) in such a way that suitable shifts in the optical phases in individual fibre lasers (12.1-12.n) of the fibre laser arrangement (10) compensate atmospheric turbulence effects on the propagation path of the laser radiation to a target (24), in order to obtain optimum focussing of the total laser radiation on the remote target (24),
**characterized in that** provided in addition to the above-named individual fibre lasers (12.1-12.n) is an illumination laser (30) which illuminates the target (24) and is adapted for effectively obtaining the control signals for the individual fibre laser branches (12.1-12.n).

2. Fibre laser arrangement according to Claim 1, **characterized in that** the light back-scattered to the transmitter by the target (24) on the propagation path of the laser radiation of the fibre laser arrangement can be led for the purpose of measuring its phase front by means of a beam splitter located in the beam path to a wave front sensor (22) whose measuring signals can be led to the control electronics (16) in order to determine the signals for driving the phase shifters (14.1-14.n).

3. Fibre laser arrangement according to Claim 1, **characterized in that** for the purpose of determining the respective phase differences in the individual branches there is arranged in the output beam of the radiation emitted by the fibre laser arrangement (10) a second beam splitter (33) that is assigned a laser phase sensor (20) whose output signals can likewise be led to the control electronics (16).

4. Fibre laser arrangement according to Claims 1 to 3, **characterized in that** for the purpose of scaling the beam power of the fibre laser arrangement (10) individual fibre branches (12.1-12.n) can be connected to and disconnected from the fibre laser arrangement via the fibre splitter (15).

## Revendications

1. Ensemble laser à fibre (10) à haute puissance de rayonnement, constitué de plusieurs lasers cohérents à fibre unique (12.1 - 12.n) fonctionnant en continu, dont l'énergie de pompage générée par un oscillateur maitre (13) commun utilisé en mode longitudinal peut être acheminée en étant répartie de manière ramifiée dans les lasers à fibre unique (12.1 à 12.n) par l'intermédiaire d'un séparateur de fibres (15), dans lequel
un déphaseur (14.1 - 14.n) électro-optique intégré est affecté à chaque laser à fibre unique (12.1 - 12.n), dans lequel ces déphaseurs (14.1 - 14.n) peuvent être commandés par l'intermédiaire d'une électronique de réglage (16) de telle sorte que des décalages appropriés des phases optiques des lasers à fibre unique (12.1 - 12.n) de l'ensemble laser à fibre (10) opère une compensation des effets de turbulences atmosphériques sur le chemin de propagation du rayonnement laser vers une cible (24), pour obtenir une focalisation optimale de l'ensemble du rayonnement laser sur la cible (24) éloignée,
**caractérisé en ce qu'**en plus des lasers à fibre unique (12.1 - 12.n) cités précédemment, on a adapté un laser d'illumination (30) illuminant la cible (24) prévu pour l'obtention effective des signaux de réglage pour les lasers à fibre unique (12.1 - 12.n).

2. Ensemble laser à fibre selon la revendication 1, **caractérisé en ce que** la lumière réverbérée à partir de la cible (24) vers l'émetteur sur le chemin de propagation du rayonnement laser de l'ensemble laser à fibre, peut être transmise à un capteur du front d'ondes (22) pour la mesure de son front d'onde au moyen d'un séparateur de rayonnement se trouvant sur le chemin du rayonnement, dont on peut transmettre les signaux de mesure pour déterminer les signaux de commande des déphaseurs (14.1 - 14.n) de l'électronique de réglage (16).

3. Ensemble laser à fibre selon la revendication 1, **caractérisé en ce qu'**un deuxième séparateur de rayon (33) est disposé dans le rayon de sortie du rayonnement émis à partir de l'ensemble laser à fibre (10) en vue de déterminer les déphasages respectifs dans les branches individuelles, auquel on affecte un capteur de phase (20) de laser dont les signaux de sortie peuvent également être transmis vers l'électronique de réglage (16).

4. Ensemble laser à fibre selon les revendications 1 à 3, **caractérisé en ce qu'**on peut connecter et déconnecter des branches de fibres individuelles (12.1 - 12.n) de l'ensemble laser à fibre par l'intermédiaire d'un séparateur de fibres (15) en vue de pondérer la puissance de rayonnement de l'ensemble laser à fibre (10).
